Europäisches Patentamt

European Patent Office

Office européen des brevets

(19)

(11) **EP 1 031 944 A1**

(12) # EUROPEAN PATENT APPLICATION

(43) Date of publication:
**30.08.2000 Bulletin 2000/35**

(51) Int Cl.$^7$: **G06T 11/00**

(21) Application number: **99480075.3**

(22) Date of filing: **30.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **22.02.1999 FR 9902154**

(71) Applicant: **Institut Eurecom G.I.E.**
**06904 Sophia-Antipolis (FR)**

(72) Inventors:
• **Dugelay, Jean-Luc**
  **06400 Cannes (FR)**
• **Roche, Stéphane**
  **06400 Cannes (FR)**

(74) Representative: **Schuffenecker, Thierry**
**97, chemin de Cassiopée,**
**Domaine de l'étoile**
**06610 La Gaude (FR)**

(54) **Process for marking a multimedia document, such as an image, by generating a mark**

(57)   Method of marking a multi-media document $I_{orig}$ by generating a mark from said document and a marking image $I_{inf\_0}$, comprising the following steps:

- decomposing the initial document $I_{orig}$ according to a lossy approximation method ;
- determining a reference image $I_{ref}$ ;
- point-by-point subtracting the initial document $I_{orig}$ and the reference image $I_{ref.}$, and according to at least one vector representative of the image in order to produce a support image $I_s$ ;
- formatting the marking image $I_{inf\_0}$ so as to obtain an image $I_{inf1}$ of the same size as the support image $I_s$ by pre-introducing at least one level of redundancy;
- point-by-point combining the marking image $I_{inf\_0}$, formatted beforehand, with the support image so as to generate a mark or a signature which can be, according to the case, either filed, or internally reintroduced into the initial document $I_{orig}$.

The combining of image $I_{inf1}$ and support image $I_s$ produces a compact-sized mark which can be either stored or reintegrated within the document itself.

Fig. 1

**Description**

**Technical field of the invention**

The present invention relates to marking a multi-media document, such as a digitized image, and in particular to marking a document by generating a mark that can be, according to the case, filed or reintegrated into the original document.

**Background art**

The security of computerized documents, and particularly of digitized images, implies being able, at one time or another, to carry out *a marking* of these documents in order to distinguish them without ambiguity by means of external information, such as identification, authentication or signature data or any other data.

Two quite distinct approaches can be considered :

In a first approach, marking is internally carried out in the sense that the identification message, the distinctive mark, is registered in the document itself, for example a digitized image. The techniques known as digital *watermarking* allow the dissimulation of a watermarking tattoo inside an image in order to "sign" it and unequivocally identify it. Digital information is inserted into an image, so as to be invisible to the eye. The picture is thus signed, for example by its author, the owner of the right on this image, a certifying authority or any authority competent to carry out this signature before broadcasting the considered document, for example its transmission or its marketing. This approach has to deal with the difficulty of conceiving a tattooing that respects a robustness/visibility compromise. Indeed, the added marking information must be sufficiently discrete to remain invisible to the eye because debasing the original work quality would be intolerable. However, as discrete as it is, the information must be very present in the image so as to ensure its perfect restitution even after the image underwent various transformations and processing such as Jpeg compressions, resolution changes, or translations of some pixels. In practice, the application of known watermarking techniques is still limited because of the following drawbacks.

A first disadvantage of the known watermarking techniques lies in the low number of bits which digital marking information can comprise, the low hiding or the low ratio between the number of bits to hide and the image bit volume, or more generally of the document being marked. For instance, for 512x512 pixels images, a coded mark with only 64 bits often represents a limit. Obviously this limits the volume of the marking information considered to be written in the document. For example, if 64 bits are used to form alphanumeric characters using 8 bits each (a byte), then the mark or signature will only comprise 8 characters at most and will thus be deprived of the user-friendlyness and degrees of freedom from which a user would benefit, could he/she use a much greater number of bits.

Another disadvantage of the known marking processes lies in the signed images poor robustness, since it is often impossible to recover the written mark from the marked image, from the moment the image undergoes a number of transformations, whether intentional or not, like translations, image rotations, a cut of some pixels, etc ... or merely the scanning of the printed considered document. Lastly, known marking techniques also suffer from the problem that, to recover the signature or mark, it is generally necessary to have the original document, if not the original signature itself.

Another disadvantage of known marking and signature techniques lies in the relatively important visual degradation of marked images as soon as the bit size of the mark tends to expand. To mitigate this disadvantage, one can be tempted to resort to a second approach in order to respect the original work or document integrity. This second approach - known as *external approach* - consists in generating a reduced format characteristic imprint of the original image and marking message to be stored thereafter, for example to a third party. In this approach the question of the visibility does not arise any more since the original image can be broadcast directly without distortion. Moreover, this approach is highly desirable in certain very sensitive applications for which fraudulent attempts to reach within the marking algorithm must be avoided, internal approaches remaining very sensitive to that problem. Indeed, with internal approaches, since the marking sign is inside the image itself, a careful observer might study the image thereby penetrating its secret mechanism.

The internal and external approaches are not exclusive of each other but rather complementary. In some cases absence of distortion and resistance to the malevolent intrusions which the external approach allows will be favoured. In other cases the internal approach will be preferred for its easiness of use as it allows to directly sign an image that can then be directly broadcast, without a certifying person or authority intervening for example.

Whatever the retained approach, internal or external, it is always desirable to lay out a general image processing technique which makes it possible to generate a mark which can be, according to needs, either reinstated within the document itself as its "signature" in an internal approach, or used in an external approach, for example for storage to a third party. In the latter, it is essential that the mark presents a sufficiently compact format to facilitate its storing while interweaving elements of the original document and of the marking information. On the contrary in the internal approach, the process will have to make it possible to accurately reconstitute the marking information when the original image is presented, even after this one underwent many complex and nondestructive transformations and processing.

Such is the aim of this invention which proposes to provide a greatly versatile solution, which can be used, according to needs, both in an internal approach and in an external approach.

The French patent applications, not yet published, N °FR 98 04 083 (Co pending PCT application PCT/ FR99/00485), FR 98 07 607, respectively deposited on March 5, 1998 and on June 9, 1998 by the owner of this application, constitute technical background within the meaning of article 54(3) of the European Patent Convention and describe improvements brought to watermarking techniques.

**Summary of the invention**

The object of the present invention is to provide a method of marking a computer document, such as an image for example, of great versatility since it must make it possible to generate a mark which can be used either in an internal way or an external way.

It is another object of the present invention to propose a method for generating an external mark which is compact enough to allow an easy filing, but also robust in order to allow reconstitution of the marking data even after the original image underwent many nondestructive transformations.

It is a further object of the present invention to provide a method for generating an internal mark which allows to write a significant information volume into a computer document while reducing the distortion brought to it, and is sufficiently robust to allow reconstitution of the marking data even when the document underwent many transformations of nondestructive nature.

To reach the set goals, the present invention proposes a method of marking a multi-media document $I_{orig}$ by generating a mark from said document and a marking image $I_{inf\_0}$, comprising the following steps:

- decomposing the initial document $I_{orig}$ according to a lossy approximation method ;
- determining a reference image $I_{ref}$ ;
- point-by-point subtracting the initial document $I_{orig}$ and the reference image $I_{ref.}$, and according to at least one vector representative of the image in order to produce a support image $I_s$ ;
- formatting the marking image $I_{inf\_0}$ so as to obtain an image $I_{inf1}$ of the same size as the support image $I_s$ by pre-introducing at least one level of redundancy;
- point-by-point combining the marking image $I_{inf\_0}$, formatted beforehand, with the support image so as to generate a mark or a signature which can be, according to the case, either filed, or internally reintroduced into the initial document $I_{orig}$.

Thus, the combining of image $I_{inf1}$ and support image $I_s$, after thresholding of the latter, by means of a logical operation will produce a compact-sized mark which can be stored. On the contrary, "modulating" or varying support image $I_s$ by the value of $I_{inf\,1}$, according to a law of correspondence between $I_s$ and $I_{inf1}$, will produce an internal mark which can be reintroduced in the reference image so as to generate a signed image.

More especially, the present invention proposes a method of marking by generating an external mark. More particularly, the method produces an external mark from an original document $I_{orig}$ and from a file comprising a marking image $I_{inf\_0}$. The method comprises the following steps:

- decomposing the initial document $I_{orig}$ according to a method of fractal analysis while providing a IFS code, for instance of contractive type ;
- determining a reference image $I_{ref}$ associated with said IFS code ;
- subtracting the initial document $I_{orig}$ and reference image $I_{ref.}$, point-by-point, and according to at least one vector representative of the image, followed by thresholding the result to produce a binary support image $I_s$ ;
- formatting the marking file $I_{inf\_0}$ so as to obtain an image $I_{inf\_1}$ whose size is comparable with that of the support image $I_s$ by pre-introducing at least one level of redundancy ;
- combining, point-by-point, the preformatted marking image $I_{inf\_0}$ (i.e. $I_{inf\_1}$) with the image known as the support image by means of a logical operation, such as a XOR or an inverse XOR. The result then produces an external mark which can be filed.

This marking data can be used for whatever purpose it may serve. In particular it can be an identification data of the image, a copyright note or a note specifying the kind of information which is contained in the computer document, even a confidential note to automatically locate the document circulating on a network.

In another mode of realization, selected IFS code can be of noncontractive type and image $I_{ref}$ is then calculated directly from the original image $I_{orig}$.

In a preferred mode of realization, the invention uses a secret key device allowing introduction of a pseudo-random noise in the marking image, before combination with support image $I_s$.

Accordingly, the invention proposes a process making it possible to reconstitute, from the filed mark, marking data associated with the original document even after the latter underwent some nondestructive transformations. More particularly, the process includes a step of decomposing the multimedia document $I'_{orig}$ according to a fractal analysis method while providing a IFS code, for example of contractive type. Corresponding attractive image $I'_{ref}$ is then generated. Then occurs the point-by-point subtraction of the multi-media document $I'_{orig}$ and attractive image $I'_{ref}$, and according to at least one vector representative of the image. This operation is then followed by thresholding of the result to produce a binary support image $I'_s$. The next step is that of combining the mark, disnoised by means of type XOR or inverse XOR logical operation, with said support image $I'_s$ by preliminary proceeding to reframing or resynchronization of the latter to take into account any possible transformation of the image $I'_{orig}$ to analyze. Finally the result of this combination, after reframing, can then be formatted to excerpt, if necessary, the marking image contained inside the external mark.

In another mode of realization, the fractal decomposition resulting in $I_{ref}$ can be replaced by other lossy approximations, such as the one resulting from a Jpeg coding, a cosine coding or a reduction of the image resolution.

In a particular mode of realization, the invention relates to a method of management of owner rights and the marking image carries the logo of the owner of the right.

In a particular application, the marking image is used for control in a network node, in co-operation with an adequate sensor device which can then control interception of the original image $I_{orig}$ or a $I'_{orig}$ form derived from it.

To reframe a point-by-point combination of the mark, which was disnoised by means of a logic operation, with said support image $I'_s$ is performed, by an elementary geometric transformation T on said support image $I'_s$. An iteration intervenes on the preceding combinations for a whole collection of elementary transformations extracted from a dictionary, or codebook, and a consistent score is then calculated which is intended to maximize the redundancy effect that was introduced into the marking image on a local and general level, for each transformation.

Alternatively, the invention proposes a method of signing a computer or electronic document by introducing <u>an internal mark,</u> such as an image, which can be implemented independently of the generation of an external mark. In this case, the mark is simply reinstated into the image itself so as to allow its later extraction. The signature process involves the steps of:

- decomposing the initial document $I_{orig}$ according to a lossy approximation method;
- determining a reference image $I_{ref}$ ;
- subtracting the initial document $I_{orig}$ and reference image $I_{ref.}$, point-by-point, and according to at least one vector representative of the image in order to produce a support image $I_s$ ;
- formatting the marking file $I_{inf\_0}$ so as to obtain an image $I_{inf\_1}$ whose size is comparable with that of the support image Is by pre-introducing at least one level of redundancy;
- combining, point-by-point, the preformatted marking image $I_{inf\_1}$ with the support image $I_s$ in order to produce a signature $I_{inf\_2}$.

More particularly, the $I_{inf2}$ signature is incorporated into the $I_{ref}$ image and results from "modulation" of preformatted marking image $I_{inf1}$ according to the GAP value contained in support image $I_s$, that is to say between the original image or the initial document $I_{orig}$ and the reference document $I_{ref}$, and according to law of correspondence between GAP and noised marking image $I_{inf1}$. The following law of correspondence can be employed:
$I_{inf\_2}(x, y) = $ Inf $(GAP(x, y); 0)$ or Sup $(GAP(x, y), 0)$ according to whether $I_{inf\_1}$ is respectively equal to 0 or to 1.

Operators inf and sup respectively represent the mathematical operators providing respectively the smallest and the largest values considered. The signature process is such that the pixels which «carry » the digital mark will tend to qualitatively move away image from $I_{ref}$ and, on the contrary, to bring it closer to $I_{orig}$, thus increasing the original fidelity of the signed image $I'_{orig}$ towards the original image $I_{orig}$. It is an important advantage resulting from the signature process. Various alternatives can be introduced on the way of modulating $I_{inf\_2}$ between 0 and the value of GAP, by choosing other terminal values, for example 1 and 1,2 times the value of GAP, instead of 0 and one time the value of GAP.

Once determined, the internal signature $I_{inf\_2}$ can then be added to image $I_{ref}$, which makes it possible to produce the signed image which can then be broadcast.

Correspondingly, the extraction process of the signature $I'_{inf\_2}$ from a modified image $I'_{orig}$ comprises the steps of:

- decomposing the document $I'_{orig}$ to be checked according to the decomposition process that was used for the signature process;
- determining a reference image $I'_{ref}$ ;
- subtracting the document $I'_{orig}$ to be checked and reference image $I'_{ref.}$, point-by-point, and according to at least one vector representative of the image in order to produce a support image $I'_s$, from which the signature $I'_{inf\_2}$ can be deduced;

- comparing said signature $I'_{inf\_2}$ with a predetermined threshold value and deriving the value of the preformatted marking image $I'_{inf\_1}$ in accordance with the following formula:

$$\text{if } I'_{int\_2}(x,y) > \text{predetermined threshold, then } I'_{inf\_1}(x,y) = 1$$

$$\text{if } I'_{inf\_2}(x,y) < \text{threshold then } I'_{inf\_1}(x,y) = 0$$

- reframing said performatted marking image in order to take into account any possible transformation of the image to analyse by means of a search of coherence with the level of redundancy introduced in the signature process in order to reconstruct, when existing, the marking image which can then be displayed. A substantial advantage of this extraction process is to allow full blind retrieval of the mark since neither the original image nor the mark hidden in that image are necessary for the extraction process.

The process of generating an external mark and the process of generating an internal mark are completely independent. It is thus clear that the invention can be used merely in one of these cases, for example, to produce only one signed watermarking «type» image, or conversely.

**Description of the drawings**

Embodiments of the invention will now be described, by way of examples only, with reference to the accompanying drawings, wherein:

Figure 1 is a schematic representation of the method of generating an external mark in accordance with the present invention.

Figure 2 is a schematic representation of the process of marking data reconstitution from an image $I_{orig}$ which may have undergone various transformations and processing.

Figure 3 represents an example of sign to be inserted in an image, such as a signature in the form of a logo, as well as its transform after completion of a first preprocessing phase of enlargement;

Figure 4 represents the signature example of figure 3, after a second preprocessing step of transform duplication.

Figure 5 illustrates a particular application of the method of generating an external mark for the purpose of constituting a digital image recording protocol in a certification server, for instance on the Internet network.

Figure 6 illustrates the signature checking protocol within the certification server.

Figure 7 illustrates the method of generating a mark which can be reintroduced in the processed image, so as to produce a signed image.

Figure 8 illustrates the signature extraction process within the signed image.

The figures 9a and 9b are respectively monodimensional diagrams of signals used during rebuilding of the signature information, illustrating reframing of the noise and of the signature.

Figure 10 illustrates the consistency test in the process of extraction of the internal mark.

**Description of the preferred embodiments of the invention**

One of the functions of document marking is to, internally according to the *watermarking* techniques or externally, write digital information which constitutes a marking sign to be used for various reasons. A first use which comes immediately to one's mind is an identification sign, such as a signature or a tattoo, which makes it possible to relate the computer document to an entity, a person or a company. But obviously other aims can be considered, which will depend on the particular function assigned to the marking sign : marking of a document to characterize the kind of document, note of confidentiality etc... By means of non restrictive example, the invention will be described in relation with use of a computer document signature mark, which mark will consist of a company's logo, for example that of *Eurecom Institute,* owner of this patent application.

Realization of the invention in the case of the marking of a document which contains a fixed image will also be described, being understood that the invention is not limited only to fixed images, but can be adapted to other kinds of documents, for example digital audio, video etc. The only restraints imposed by this algorithm are volume restraints. To give an order of magnitude about binary information volume, in simulation marking signs made up of image files containing a logo of 64x64 pixels coded on two binary levels were usually used. That represents an information volume of several thousand bits which is considered to be associated with 512x512 pixels images, each one being 3 bytes coded, where nevertheless only one byte (luminance) is really used to produce the mark. This particular, and by no means restrictive, choice which will be described is based on the concern of preserving the possibility of marking images in gray levels or shades, or of finding the marking data when the original color image is represented in black and white.

We will now consider successively the method for generating an external mark to be filed (I), then the adaptation of this method for generating an internal mark which will be reintroduced in the processed image itself (II).

### I. Using the invention to generate an external mark which can be filed

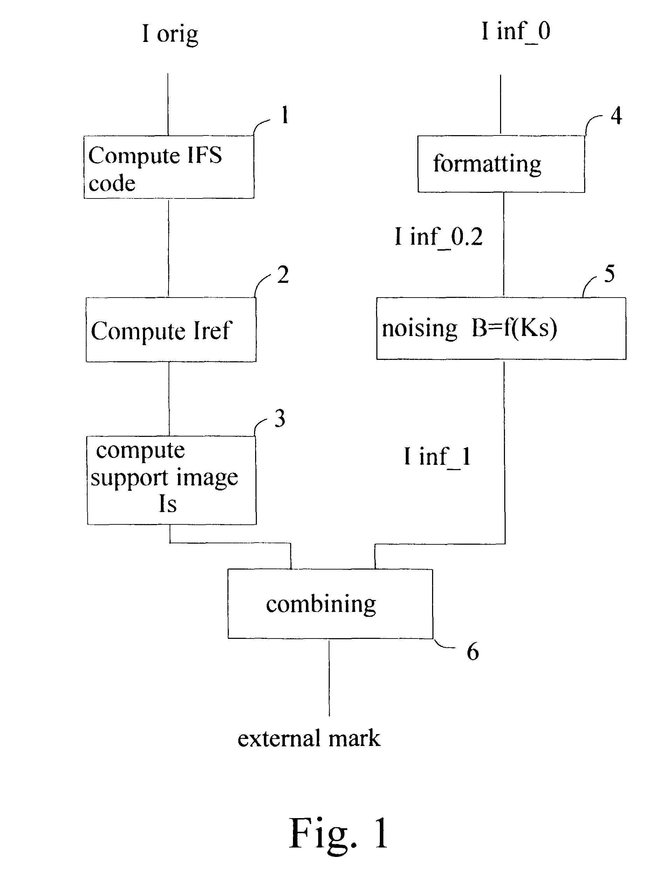

The process of generation of an external mark will be particularly described in reference with figure 1. Although the process can be employed with any lossy approximation method, such as Jpeg, a cosine coding or by reduction of the resolution, the invention will be particularly described in reference with auto-similarity fractal analysis such as described in detail in the application PCT/FR99/00485 and which contents are herein incorporated by reference. Original image $I_{orig}$ is processed according to a first step 1 in order to generate a Iterated Functions Systems *(IFS)* code which is characteristic of the original image. This processing is based on auto-similarity analysis which results from the fractals theory. Though the auto-similarity concept is essentially used in image processing for compression purpose (for example in fractal coding), herein it is described how fractals can be used to adequately calculate a reference image $I_{ref}$ which can be used to generate a mark, external in this case, which presents a compact format allowing easier storage, and is advantageously filable, for example to a certification server. But as discussed previously, fractal coding can be replaced by any other lossy coding or approximation.

The invention will be particularly described in reference with image processing in grey shades or levels. In the case of auto-similarity fractal coding, auto-similarity implies describing an image either in terms of «pixels » associated to a grey shade, but under the form : such area is «similar» to such other area, a given transformation modulo. Hereinafter *«context »* will designate a selection of a number of primitives for image cropping, the way they are of laid out, the matching criterion (that is to say the total "distance" between reference image $I_{ref}$ and initial image $I_{orig}$ derived from the elementary "distances" between the various areas), as well as all authorized transformations between primitives.

The initial image to process, called $I_{orig}$, is cropped into a set of primitives, called *ranges,* which must cover the whole image (possibly with an overlapping). Moreover, one basic dictionary Dbase is built which consists of *domain* primitives. The elements of this dictionary are also extracted (by default) from the image itself, but they do not need to cover the whole image to process. There is no particular constraint regarding distribution of the *"domain"* primitives. The dictionary thus built, is then enriched by using geometrical and photometric transformations to form a final dictionary of authorized transformations *Dfinal.* It should be noted that elements can be added to the Dfinal *dictionary* which is not available to external users. Typically affine type transformations will be employed to create new primitives, but other more complex transformations can also be used. Transformations can include geometrical operations, such as isometry (i.e. symmetries, rotations, reflections), or photometric transformations, for example on luminance values. In particular, the context will make it possible to determine whether the IFS code has contractivity qualities. It should be noted that to implement the process with the use of software, the defined context is declared with the software responsible for executing calculations relating to the generation and extraction of the mark. Then each *range* primitive must be matched to a dictionary *domain* primitive according to a distance criterion, for example the Minimal Mean Square Error (MMSE) which is well-known to people qualified in the art. Conversely, in some cases it can be interesting to move the reference image $I_{ref}$ away from the original image $I_{orig}$. Usually the Euclidean distance will be used, but other distances can be used.

While indexing the *range* primitives to i, the associated transformation will be noted $w_i$ (i.e. the transformation which defines an element of the basic dictionary, plus a transformation). Local transformations ($w_i$) union will be noted W, the image made up of all *range* primitives and roughly represented from an element of Dfinal will be noted WI, and the attractor associated with W will be noted A if it exists. It will be reminded in this respect that, if the code selected is contractive, it is possible, by using the *"collage theorem",* to consider attractor A (that is to say the image resulting from n reiterations of transformation W) from any initial image $I_0$ or $I_{init}$ : $A = W^n (I_{init})$, instead of transformation WI, which is the union of *range* blocks that are approximated from $I_{orig}$ : WI is the transform of $I_{orig}$ by W transformation applied once: $W_i = W (I_{orig})$. It is pointed out that a transformation W defines its attractor A, since the transformation W applied n times to any image results in image A when the selected IFS code is contractive. When the selected IFS code is not attractive, then reference image $I_{ref}$ must be derived directly from original image $I_{orig}$ with formula : $I_{ref} = W (I_{orig})$.

Illustratively, in an example of implementation of the invention, the following context which can be classically used in image compression can be considered. The primitives are square blocks, thus operating a 8x8 pixels matrix zoning of *ranges,* and 16x16 pixels matrix zoning for *domains.* Authorized transformations of the fields are : under-sampling by 2; 0 ° rotation (that is to say identity), 90° rotation, 180° rotation and 270° rotation; symmetries regarding geometrical transformations; and a shift and scaling operation of luminance values.

In other terms, each local transformation $w_i$ can be written as :

$$W_i \begin{pmatrix} x \\ y \\ z \end{pmatrix} = \begin{pmatrix} ai & bi & 0 & x \\ ci & di & 0 & y \\ 0 & 0 & si & z \end{pmatrix} + \begin{pmatrix} ui \\ yi \\ oi \end{pmatrix}$$

where $a_i$, $b_i$, $c_i$, $d_i$ represent the geometrical transformation (over/sub sampling, plus rotation/reflection,...) ; (x,y) represent the image point coordinates and z represents the associated gray shade ; ($u_i$, $v_i$) represent the displacement which is necessary to match the *domain* primitive position with the corresponding *range* primitive ; $s_i$ and $o_i$ respectively represent scaling and shift of the values of luminance.

Thus, at step 1 in figure 1, the processing aims at describing the image $I_{orig}$ by means of IFS code. To this end, as mentioned above, the original document $I_{orig}$ is cropped into a set of primitives *range(i),* which cover the totality of the original document. Then, a set of primitives *domain(j)* is extracted in order to constitute a dictionary of basic primitives *domain(j)* (Dbase). From the dictionary of basic primitives *domain* (Dbase), is determined a dictionary *Dfinal* of additional *domain* primitives, by applying a set of geometric and/or photometric local transformations *wi* to basic primitives. In certain modes of realization, it is even possible to introduce secret elements into the *Dfinal* dictionary in order to reinforce the security of the process of external mark generation. Thereafter, each basic primitive *range(i)* could be paired with a *Domain*(j) primitive included in the primitive dictionary *Dfinal,* in such a way that each primitive *range(i)* is equal to a primitive *domain(j)* transform obtained by a local transformation $w_i$, to within about one error ε. The image description thus obtained is rather compact, even if the compression effect is not really seeked. This description is a IFS code that can be concretely gathered in a file in a form which can vary according to the selected mode of realization. It should be noted that the IFS code is very dependent on the determined context, that is to say on the cutting into primitives which is selected, as well as of the chosen set of affine transformations. This context is particularly selected according to the particular application which will be selected for the process of external mark generation. In particular, it should be noted that, to ensure the marking image reconstitution process robustness, it is necessary that the geometric transformation dictionary be selected to correspond to elementary transformations which the image might undergo and which, during the marking image extraction process, will allow to then reconstitute the logo.

The choice of the dictionary, that is to say the context, enables to ajust qualitative differences between image $I_{ref.}$ and image $I_{orig}$. Moreover, when the selected IFS code is not contractive, then, as dicussed before, image $I_{ref.}$ directly results from original image $I_{orig}$ by formula $I_{ref} = W (I_{orig})$. On the other hand, when the selected context is contractive, then attractor image is then built from any starting image lo or $I_{init}$ - black, for example -, by means of a series of images $W^n(I_0)$ which will converge towards a limiting value which is the *attractor* image $I_{ref}$. This property comes from the fractal attractor theory, resulting from the *Mandelbrot's* fractal mathematical theory and *Hutchinson's* systems of reiterated functions, such as applied to *Barnsley's* image processing. Whatever the chosen code, attractile or not, step 2 of the process illustrated in figure 1 thus makes it possible to constitute this $I_{ref}$ image which is necessary to the generation of the support image $I_s$.

In step 3, $I_{ref}$ image and $I_{orig}$ image are then combined in order to generate *the support image* $I_s$ intended to be combined with the marking image. To this end a point-by-point subtraction of vectors representative of the image is performed. It should be noted that various compositions of vectors are possible according to circumstances. In particular the vector can be a primary colors vector, red-green-blue, or can include a luminance characteristic component - allowing gray shade processing - even other bands for multispectral image processing produced by satellite imaging. In order to simplify this discussion and to clearly understand the various steps of the operating mode of the invention, only processing of the luminance characteristics components will be discussed, that is to say in gray shades. It is also possible to reproduce the vectorial phases of the process for other components. In step 3 of the *support* image generation, a point-by-point subtraction of luminance components is carried out. A difference image with numbers characteristic of gray shade offsets is then obtained. This image is then subjected to a first robustness processing by means of a thresholding operation, to define the offset direction, positive or negative. This operation ensures a first level of robustness of the algorithm, for only the sign of the offset is taken into account and not its exact amplitude. Following this processing, a binary image ready to be combined in order to generate an external mark is obtained.

Simultaneously to stages 1-2 and 3, the process carries out a processing of marking image $I_{inf\_0}$ which, as mentioned before, is an image which size is significantly lower than the size of image $I_{orig}$. This processing is carried out at steps 4 and 5 which are illustrated in figure 1.

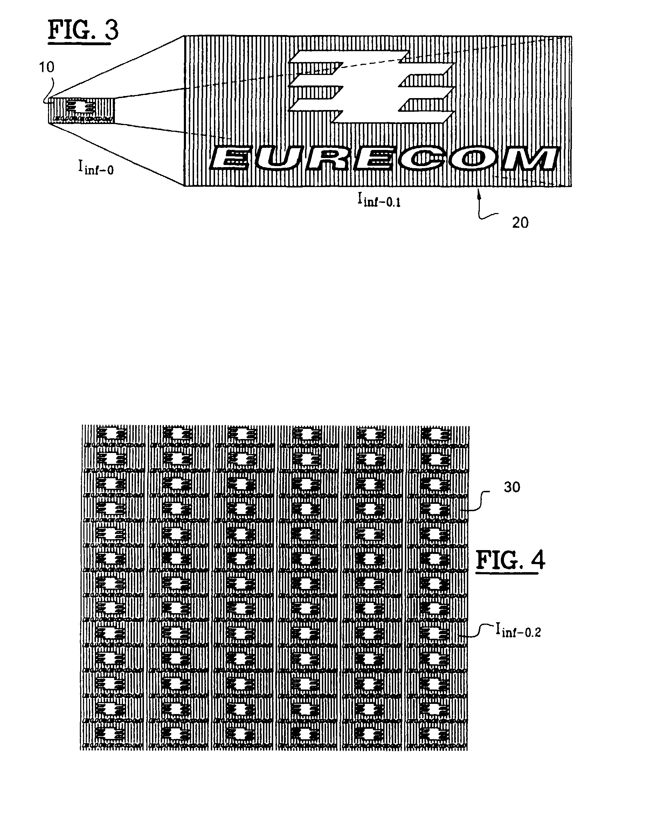

Figure 3 presents an example of binary information 10, *a marking image* containing the distinguishing *sign* which will be associated with original computer document $I_{orig}$. In the preferred mode of realization, the sign is made up of a fixed image which can present all kinds of forms according to the industrial applications considered. The fixed marking image could thus consist of plain text, but also form a company's logo, as illustrated in figure 3 which shows as an example the logo of the "Institut Eurecom," owner of this patent application. This marking image will be noted: $I_{inf\_0}$.

Step 4 then ensures formatting of marking image $I_{inf\_0}$. To this end, the latter undergoes a processing intended to bring back its size to that of image $I_{orig}$ for one part, and to introduce a redundancy effect which increases the robustness of the process of marking image reconstitution . A double redundancy effect is inserted : a redundancy at local level, followed by another at global level.

On a local level, redundancy is made by means of an oversampling of marking image $I_{inf\_0}$, consisted by Eurecom's logo. This oversampling is carried out according to vertical and horizontal directions in the manner of an enlargement or *zooming.* To this end, the binary pattern represented by marking image 10 is enlarged, so that each pixel of $I_{inf\_0}$ is k times in an intermediate transform 20, noted $I_{inf\_0.1}$. Thus, in figure 3, Eurecom's logo enlarged in this intermediate transform $I_{inf\_0.1}$ resulting from the initial logo which was smaller, is represented. Each pixel of primary marking image $I_{inf\_0}$ was duplicated k times in a vertical direction and j times in a horizontal direction, so that a basic pixel of the initial logo $I_{inf\_0}$ is now represented by k x j identical pixels which are regrouped. Thus, the same pixel is duplicated several times at a local level. This allows introduction of some replication effect, which will allow error correction and, if necessary, synchronization which will be necessary during the reconstitution of the marking image as we will see further.

It was determined, for low-pass filterings not degrading the marking image-sign quality too much, that a k = j = 3 oversampling factor constituted a suitable parameter in general. This oversampling involves an offset towards the low frequencies of the original logo, since the level of a bit is maintained with the same value throughout all oversampling. This frequential offset is consistent with the idea that low frequencies will slightly be deteriorated if the image preserves an acceptable quality and, conversely, that high frequencies are likely to disappear during a low-pass filtering not degrading too much the primary marking image -sign, which is classically admitted in the field of lossy coding.

A second level of redundancy is then introduced on a global level at step 4, which lies on a duplication of the intermediate transform $I_{inf\_0.1}$, that is to say the marking image after local level enlargement of the logo. A secondary properly formatted marking image $I_{inf\_0.2}$ thus appears, which is illustrated as a paving such as in figure 4, after enlargement on a local level and pattern duplication on a global level. In a particular mode of realization (which does not correspond to figure 4) the formatted marking image $I_{inf\_0.2}$ is generated by means of an oversampled duplication of marking image $I_{inf\_0.1}$, thirteen times in a vertical direction and four times in a horizontal direction. But other values are possible. In particular, the number of duplications to perform to form secondary marking image $I_{inf\_0.2}$ can be selected so that the latter has the original size of the original image $I_{orig}$ to be marked. In the general case where the duplication of the primary marking image-sign to be written into the external mark, that is to say the binary message, takes place L times, each pixel of primary marking image (the number of these pixels being with n) thus is k x l times in redundant secondary marking image $I_{inf\_0.2}$.

The second level of redundancy by duplication is recommended to mitigate an algorithm failure on the local level. It is indeed essential to be protected against any effect resulting from a loss of information on a local level - in a vicinity of some pixels - due to a particular processing of the image. During processing, such as *cropping,* areas of the original image disappear and it would thus be extremely prejudicial that all information enabling reconstitution of the marking image - i.e. the logo of "Institut Eurecom" - be contained in a single area of the image. This second duplication which is carried out on a global level this time, by reproduction of the enlarged logo, still increases the possibility of synchronization and error correction which the step of pixel enlargement on a local level already facilitated. This double processing of the marking image, by local enlarging and global duplication of the pattern, is perfectly appropriate for processing a fixed image but could easily be adapted to the processing of files of different nature, and in particular of the video files. The double effect of redundancy which results from formatting step 4 adds an additional element of robustness to that which already rose from the thresholding operation which was carried out in step 3 of calculation of the *support image.* More particularly, the balance of the components of the processing of step 4 which is described above, namely logo enlargement and duplication, depends on the objectives of robustness desired for the process. The final development, in particular the determination of values k and L can perfectly be performed by anyone qualified in image digital processing. Thus, in the case of video files, lower k and l values will be be satisfactory - and more generally lower redundancy will be satisfactory for format processing of the image. Indeed, because of the volume of information to be processed - i.e. several tens of fixed images per second - a redundancy effect that would be reduced concerning the format processing of the logo would be found elsewhere.

After the adding of redundancy, at a local level as well as a global level, a secondary marking image $I_{inf\_0.2}$ which is perfectly adapted to the size of image $I_{orig}$ to be marked and is also binary is provided. As mentioned, the step of formatting the marking image brings a factor of robustness which adds to the robustness effect already observed in step 3 during generation of the *support image.*

After step 4, the process of generating a mark can optionally comprise a noise element in a step 5. This step 5 depends on the desired level of security and of the computing power which is available. If it is wished that any person can regenerate the logo, during the process of reconstitution of the marking image, without having to resort to any key, then step 5 can be omitted. On the other hand, it can appear extremely convenient, in order to increase the security of the device, to give the possibility of reconstituting the marking image, i.e. the logo, only to a small number of people, or even a single individual.

To this end, a random noise of the same size as secondary marking image $I_{inf\_0.2}$ is generated. Then, the noise is introduced into the secondary marking image by means of an EXCLUSIVE OR operation, noted XOR, between secondary marking image $I_{inf\_0.2}$ on one hand and the random noise signal, noted B, on the other hand. This random noise can be generated by an algorithm with a secret key $K_s$. In a particular mode of realization, the key $K_S$ could be constituted of two parts: a *first* part, known as public part, which allows relatively large access to one part of the message, for example to reveal a copyright note, supplemented by a *second* part which will remain more confidential and which, for example, will be reserved to the owner of the right or certification authority for instance. In another mode of realization, the key could include dating data of the external enabling in particular to securely establish the moment of creation of the computer document $I_{orig}$. It should be noted that this random noise inserting step is optional and depends upon the requirements to enhance security in the marking processing. Obviously, if the filing system which is intented to receive the filed marks provides sufficient security with respect to external intrusion, the optional step of noising can be avoided.

The result of the processing of step 5 leads to a noisy marking image $I_{inf\_1}$ which is deprived of repetitivity. The presence of the noise in this image $I_{inf\_1}$ has a double advantage. On one hand it suppresses any periodicity which could result from the double redundancy introduced at step 4 and, on the other hand, the noise allows to make the distribution of the marking image that must be keyed into the external mark uniform. Indeed, by means of this noise B, information $I_{inf\_1}$ is made perfectly random and statistically independent of marking image $I_{inf\_0}$. In practice, a uniform noise can be used on interval [ 0 ; 1 / oversampling *period*]. The maximum frequency is imposed by the period which is adopted during oversampling of the primary image-sign, that is to say the initial logo. Indeed, it is known that it is prejudicial to introduce a frequency signal higher than 1/period of oversampling, for this signal would be very sensitive to low-pass filtering of the image. More generally, the choice of the noise is a matter of optimisation understandable to people qualified in the art.

The process of generation of an external mark continues then with step 6 during which *support image* $I_s$ and secondary marking image $I_{inf\_0.2}$ ,formatted and possibly noised according to step 5, are combined to produce an external mark according to the invention. This combination is done by means of an XOR operation, possibly reversed. For example, at each pixel level, a comparison is made and, if bits appear equal, the external mark will be allocated a logic "1" and, in the other case, a "0". A binary image is thus obtained, which is a hybrid result, composed of image original $I_{orig}$ and marking image $I_{inf\_0}$, which can then advantageously be filed to a database, for example to a certification server, or any other third party.

A first advantage of the invention is visible, which comes from the fact that, the external mark being binary, a substantial reduction of storage space within the certification server is obtained. Moreover, in this case original image $I_{orig}$ remains intact and can be marketed and made public just as it is, without any restriction.

But undoubtedly, the most important advantage lies in the possibility of being able to automatically find, within the certification server, an association existing between two images $I_{orig}$ and $I'_{orig}$, where one is derived from the other, through to the process of reconstitution which will be described hereafter. A first suspect image, which one has some reason to think is *derived* from an original image, can thus be analyzed with this original image, even when only a reduced mark of this image is available. A considerable lightening of the certification server storage load results, which even allows to consider filing a great number of image marks within a single database. As it is seen, in the process described, all pixels carry image, which increases the robustness of the message extraction. It is a significant advantage of the external approach because on one hand, all the pixels of the mark are used to register elements of the marking image-sign, that is to say the binary message and , on the other hand, redundancy within the external mark can be more easily increased.

The process of checking makes it possible to test an image $I'_{orig}$ which is potentially derived from an original image $I_{orig}$ through a certain number of elementary geometric or photometric transformations, and to automatically relate this image to a mark stored in a database and to return, in the event of matching, the logo associated with the mark. The process of checking thus makes it possible to test an unknown image, and to relate it to a mark stored in a data base, to finally automatically extract the message or logo associated therewith.

Image $I'_{orig}$ to be tested could be a new image, in which case no message would be reported since it would be entirely original. But image $I'_{orig}$ could also be derived from a prior image $I_{orig}$ whose mark will have been filed in the certification server data base. When at a given moment, the owner of the right on the original image $I_{orig}$, or any interested third party, is in presence of an image $I'_{orig}$, this one will seek to check if this $I'_{orig}$ image results from a prior original image. It will thus be necessary to check image I'$_{orig}$ to see if it is possible relate it to a stored mark and, if necessary, to extract therefrom the logo which is contained in marking image I$_{inf\_0}$.

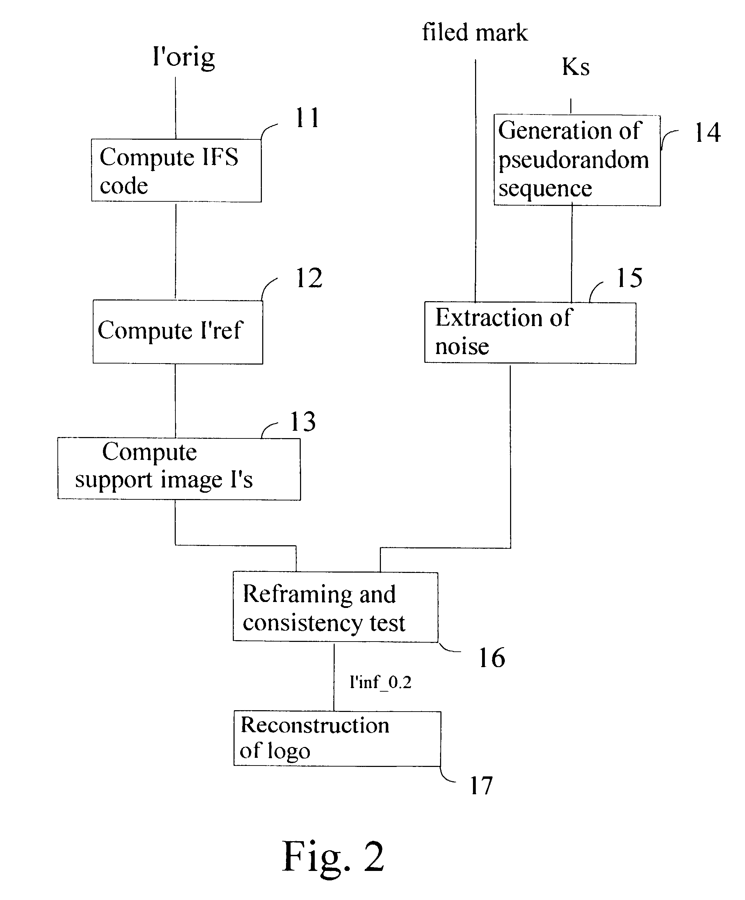

The process of image checking and of marking image extraction will be more particularly described in relation to figure 2.

At step 11, image I'$_{orig}$ to be checked is submitted to IFS code calculation, which is similar to the calculation which governed the process of external mark generation in step 1 of the process of generation of figure 1. To this end, the same set of primitives and the same dictionary of affine functions are usually used, although it is not absolutely necessary. People qualified in the art could indeed use some dissymmetries between the two dictionaries in order to optimize the marking, retrieval and recognition system .

Then, in step 12, the process of checking carries out a rebuilding of *attractor* image I'$_{ref}$ from IFS code.

In step 13, *attractor* image I'$_{ref}$ is then pixel-by-pixel subtracted from the image to check according to the vectors representative of the image, for example the components of luminance, to generate a *support* image I'$_s$ which is then thresholded to know the sign of the difference. This support image is then binary and has the same size as basic image I'$_{orig}$.

When the filed marks are noised and encoded according to step 5 of the process of external mark generation of figure 1, then the image checking process is correspondingly associated to a disnoisying operation of carried out in steps 14 and 15. To this end, key K$_s$ is introduced to generate the pseudorandom sequence which was used during the noisying of secondary marking image I$_{inf\_0.2}$.

After the generation of the pseudorandom sequence, in step 14, the process then causes extraction of the noise which was contained in the filed mark. To this end, in step 15, each bit of this pseudorandom sequence is associated with a corresponding pixel of the noised filed mark, and submitted to a logical operation, XOR for example. It should be noted that the same association law between the image pixels and the pseudorandom sequence bits is used as for the step of generation of the mark. For example, the law could be an image scanning law, from left to right, and from top to bottom, as the law known in television signal scanning. But other possibilities can be considered.

After the processing of step 15, a synchronization step is necessary before rebuilding of the original logo I$_{inf\_0}$ which was used to generate the external mark. Indeed, due to intentional or unintentional processing the modified image I'$_{orig}$ might have undergone, the result of the support image could be a translated, cut version of original support image I$_s$ which was used to generate the mark. In the particular case where the image would not have been modified, or when fractal coding alone would absorb the transformations undergone by the original image, both support images would be identical, so that the binary message of marking image-sign would be extracted immediately without difficulty. This is particularly the case with an uniform increase in luminosity on all the image surface.

Globally, in order to automatically rebuild the initial logo I$_{inf\_0}$, it is necessary to operate an inversion of the process of formatting of the logo. This involves a XOR operation, for instance, between the disnoised external mark and the *support image* I'$_s$. The result - which can be referred to as I'$_{inf\_0.2}$ - is then analysed by means of estimators using as well as possible the information redundancy in spite of the disturbances potentially undergone by the image. In other terms, it is possible to relatively readjust disnoised mark (resulting from step 15) with support image I'$_s$ in such manner that after a series of simple transformations of this support image calculated from analyzed image I'$_{orig}$, a logo which is close to the initial logo I$_{inf\_0}$ is found, then one will know that the modified image I'$_{orig}$ will have been obtained from an original image I$_{orig}$, and by the same occasion one will have found the signature of the owner of the image, or the relevant information associated therewith, such as a confidentiality note.

Step 16 has as an aim, on one hand synchronization of support image, then on the other hand, its combination with the mark generated at step 15. Each elementary processing implies using a function T selected from a set of geometric functions carrying out modifications of the support image positioning. Functions T such as translations, rotations, homotheties, scale changes can thus be successively employed.

For example, in a *first* elementary processing, support image is submitted to a first 2 pixels translation to the right. The result is then combined, pixel by pixel, with the disnoised mark which was generated in step 5. At the end of this combination, a test is carried out on the result in order to measure a probability score which measures the level of redundancy that the result presents : for example the number of elementary patterns made of same value pixels, such as packets of 4 bitsx4bits pixels with 32 pixels interval for example, repeated every 32 pixels for example. The measure of the recognition index strongly depends on the enlargement and duplication process which was used for the message or logo formatting in the process of generation of the mark.

Then, in a *second* elementary processing, support image is submitted to a second geometric function, introducing for example a translation of 2 additional pixels towards the right, and the recognition index corresponding to this new function T then is generated and compared with the previous index.

All T functions resulting in pixel displacement to the right can thus be submitted to similar processing, then those resulting in a displacement towards the left ...

The other geometrical functions, such as rotations, homotheties and symmetries can thus be submitted to similar processing and result in a measure of the recognition index, characteristic of a message perception or a logo formatted in the support image which is tested.

When all T functions pertaining to the dictionary are exhausted, the process calls upon a decision element which will determine if the value of the highest generated index corresponds to a sufficient probability of recognition of a filed mark. In general, a threshold mechanism can be used to take such a decision.

Thus the successive comparison of all the indices makes it possible to provide a measure representative of the matching probability between the filed mark and the image to test.

In concrete terms, step16 first starts with reframing the disnoised mark with support image resulting from the processing of analyzed image $I'_{orig}$ in order to ensure combination logical operation of the two entities, in particular a XOR. The technique of reframing is based on a search for coherence between the various bits contributing to the rebuilding of a pixel of the logo of marking image $I_{inf\_0}$. To this end, one performs the maximization of a criterion which is based on two subcriteria in relation with the two levels of processing used in the formatting operation step 4, namely the steps of local enlargement of a k factor and of I times global replication of the intermediate transform $I_{inf\_0.1}$ containing the enlarged logo.

The first subcriterion, known as local, is related to the oversampling of the logo and result in checking that the bit value remains constant over the period of oversampling. This condition is met only if the disnoised mark has been correctly reframed to support image $I'_s$ resulting from the analysis of image $I'_{orig}$ to test, with XOR operation in step 16. Indeed, before noisying of secondary marking image $I_{inf\_0.2}$, the value of one bit of image $I_{inf\_1}$ is locally reproduced k times around this bit, and the value of this bit is still reproduced I times at the global level, because of the replication operation which is introduced on the intermediate transform $I_{inf\_0.1}$ to produce secondary marking image $I_{inf\_0.2}$.

Consequently, the same type of local and total consistency must be found on the result of logic operation XOR of step 16. One just needs to test several possible transformations of $I'_s$, which correspond to inverse processings of those image $I_{orig}$ might have undergone before becoming $I'_{orig}$, and several types of relative reframing before XOR logical operation. According to the results of these operations, it will thus be known if image $I'_{orig}$ can be associated with a filed mark and, in this case, automatically extract the initial marking image $I_{inf\_0}$.

Consequently, reframing of the $I'_s$ images and of disnoised mark is done by a series of iterations by which successive transformations are applied to $I'_s$ and, for each of them its effect on the XOR result coherence between support image $I'_s$ on one hand, and the filed mark free from noise on the other hand, is examined. As previously mentioned, when the image $I'_{orig}$ to be tested and the filed mark are linked by the same original image long, the result of step 16 is a secondary marking image $I'_{inf\_0.2}$ which is very close to image of secondary marking $I_{inf\_0.2}$ which was used to create the external mark. When the offset is correct, secondary marking image $I_{inf\_0.2}$ produced by step 16 presents a strong degree of redundancy, both on the local level and global level, that can be used as a decision criterion.

In practice, in order to test the coherence of the result produced by step 16, that is to say a secondary marking image $I_{inf\_0.2}$ produced by step 16, a function known as coherence function is built on the basis of two subcriterion at the local and global level. A score of coherence to be maximized is calculated in the following way. For each basic binary bit of the logo, in all its occurrences in $I_{inf\_0.2}$, the difference in absolute value between the pixels whose binary value is zero and those whose binary value is one is calculated, then all n pixels of the basic logo $I_{inf\_0}$ are added up, this sum constituting a score of coherence to maximize by use of possible transformations applied to support image $I'_s$.

Reframing is then similar to the maximization of this function in relation to the transformations variable which takes its values in a predefined set : offset, scaling factor, rotation... In practice, it is like iteratively testing the value of the function of coherence for a whole series of T transformations of the image and retaining the transformation or the combination of transformations which maximizes the function of coherence. It should be noted that the calculation of each score is independent of the others, and all calculations can be made in parallel. In other terms, all transformations T to be tested, to each of which will correspond a score, could be realized in parallel. Moreover, the occurrences created by enlarging of the logo (for example) can be more (or less) trusted than those created by duplication, or reciprocally. By default, they can not be distinguished. In addition, in the present implementation, the set of transformations consists of all the operations of translation of the image, of *mirroring effect,* of positive and negative zooming, or of combinations. The method could be immediately extended to other transformations, if robustness requirements justified it in regard to additional transformations, thus authorizing a greater compensation for processing of the marked image.

When synchronization is complete, the $I'_{inf\_0}$ logo can then be extracted so as to finally allow visual comparison with the initial logo $I_{inf\_0}$. This construction consists in reversing redundancy addition which characterized step 4 of formatting the initial logo. With this intention, a decision module based on a *vote* of the various pixels of secondary marking image $I'_{inf\_0.2}$ is used : the k x I pixels which *vote* in a certain way are replaced with a single pixel, in order to pass from $I'_{inf\_0.2}$ to $I'_{inf\_0}$. For a pixel of the given logo, among the bits which are considered valid, a vote is organized which is possibly balanced by information which results from reframing, about the occurrences value (0, 1, unspecified because of the nonsignificant character of the measured amplitude) among all the occurrences of this element in secondary marking image. Once reframing is complete, the images areas which can be highly trusted can then be distinguished from the others, and a weighting which is taken into account at the time of the vote can be defined. If the obtained score is higher than a certain predetermined threshold, that is to say if a sufficiently vast majority is gained, the logo pixel takes the value of the main group of pixels. It should be noted that the threshold to which the score must be compared is a development understandable to people qualified in the art.

At the end of the voting step, a binary image $I'_{inf\_0}$ is obtained and its visual examination makes it possible to determine immediately if it identifies with a logo. Indeed, if $I'_{orig}$ image to be analyzed is an image which is obtained from transformations of the $I_{orig}$ image which is associated with the external mark stored, then $I'_{inf\_0}$ is identical to $I_{inf\_0}$ within a few bits. In case a visual logo is used, certain erroneous points can be corrected with a vicinity coherence criterion : a single white point cannot be isolated in an entirely black area.

Thus, in concrete terms, if the marking image which is built in step 17 appears in the form of a visible logo - for example the "Institut Eurecom"'s logo -, it means that marking image $I'_{inf\_0}$ is very close to original marking image $I_{inf\_0}$ used to build the external mark which is filed in the data base, and which was used to analyze $I'_{orig}$ image . This then enables a human operator to very simply and immediately note that modified image $I'_{orig}$ is only a transform of an original image whose mark was stored in the data base of the authentication server. If the analyzed image cannot be associated with any filed mark, it is then clear that nothing coherent will be extracted from the image to analyze which will then be a completely original image.

The invention thus enables to analyze any image and to determine if it is associated with a mark which is filed in a database, without necessarily having a copy of the original image which was used to produce the considered mark. According to a mode of realization of the invention, the image to be analyzed is iteratively compared with a whole series of marks stored in the database, so as to almost automatically produce the logo of the company or individual who created it or, more generally, marking information to which the image can be associated. As a particular application of the invention, the possibility of automatically testing computer documents which pass through a network can be considered, to determine and intercept certain types of documents if needed.

As mentioned, the invention allows use of marking images or information of relatively great size, while ensuring a good robustness against transformations of the image. Indeed, because of the degree of robustness of the process, a relatively restricted dictionary of basic functions T can be appropriate. Thus a reduced set of translations and rotations can allow synchronization and reconstitution of the logo or message. Thus, for example, it will not be necessary to consider all translations, pixel by pixel, to allow resynchronization of the image. On the contrary, a limited set of translations, presenting a step a few pixels wide, could be sufficient.

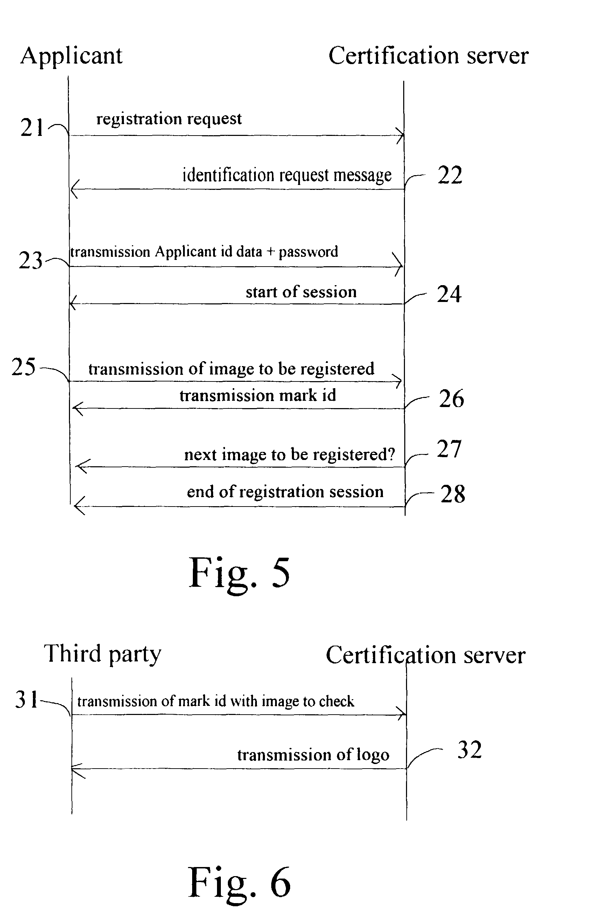

Figure 5 illustrates application of the invention in the constitution of a protocol of transaction on the Internet network for example, which allows recording of the owner of the right's identification data in an automated server. The protocol is composed of an initialization phase and a phase of recording of the images subjected by the applicant. It should be noted that this transaction intervenes in general on a teleprocessing network and implies a certain number of messages which must be exchanged and whose development is understandable to people qualified in the art.

The first initialization phase starts with step 21 during which the owner of the right on one or more recording images requests recording on a telecommunications network. The certification server answers this request by sending an identification request message in step 22. Then, at step 23, the owner of the right sends his identification data and a password permitting the server to grant the recording request. Upon reception of the applicant's identification data, the server sends an acknowledgement of delivery confirming the beginning of the image recording session at step 24.

The second phase then allows successive recording of all the images subjected by the applicant. In step 25, the applicant sends on the network the first image which is then analyzed according to the process of the invention. The mark can then be generated, and the certification server can then return, at step 26, the mark identification number corresponding to this first image. At step 27, the server invites the applicant to produce, if necessary, other images to record and each image automatically processed which allows the mark identification number to be sent back to the applicant. When the last image was treated, the certification server then returns an end of session message which enables closing of the transaction, at step 28.

Figure 6 now illustrates the protocol of automatic checking of image marking data to a certification server accessible through a communication network. In this protocol, a first step 31 enables a third party which is interested by an image to submit it as well as the mark identification data to the server. In a particular mode of realization, the identification data of the mark can appear in a image heading so as to allow any interested person to check the existence of right on the image. Let us note that falsification of these identification data is not advantageous for a malevolent person. In step 32, the logo of the owner of the right is returned by the certification server after the implementation of the image analysis algorithm according to the invention.

Generally, in such an application of rights management, both processes of mark generation and image checking are carried out in a theorically protected space, safe from inquisitive eyes. In this manner, the mark which is generated is at no time made public, which is an advantage compared to the *watermarking* traditional approaches. Indeed *"selected plain text" type* attempts to penetrate the algorithm code are thus made difficult. Indeed, anyone external to the certification server has no way to observe means the relations of dependence between an image and its mark ; thus the person cannot subject a set of images and observe the modifications generated on the marks in order to try to penetrate the mark generation algorithm. In the mode of realization which is described, the only information which is returned by the certification server after an image analysis is the logo of the owner of the right. But correspondence between the mark modification and the extracted logo modification is absolutely not common because of the strong redundancy mechanisms which were previously described and which are implied in this relation. Many modifications of the mark preserve the logo intact. In a mode of realization, the certification server can be programmed so as to return the logo as stored in the data base only when the mechanisms of coherence search show its existence on a large part. In the other case, a mere chart can be returned to indicate that the considered document has not been recorded. In this situation, the relationship mark modification / logo modification thus disappears completely for a person remaining external to the certification server, thus accentuating the algorithm secrecy efficiency.

The process of generation of an external mark guarantees the possibility for owners of rights to market the images as they are, without loss of quality, while providing the possibility - by remote data transmission - of showing a proof of the existence of rights on this image by means of the checking protocol according to the invention. When a third person is interested by a particular image, he/she can directly access, thanks to the means of the invention, the logo of the owner of the right in a reliable and effective manner, such as described above. Moreover generation of an external mark has a double advantage concerning image recording. First for the owner of the right who needs only to keep the original images. The certification server or operator which stores the mark only has to store a mark which presents a compact and reduced format compared to the original document. If one considers for example the processing of a 24 bits color image by the certification server, it comes to filing a binary mark, and possibly a secret key, which represents 24 timesless information than the original image. In a particular mode of realization, the amount of stored information can be further reduced by means of a lossless coding adapted to the binary images. Such a coding is known by people skilled in the art and will therefore not be described hereinafter. To implement the process of image checking according to the invention, it is sufficient to use this mark without necessarily having neither the original image, nor of the signature itself. The invention is thus well adapted to blind signature extraction.

Both discussed protocols are adapted to the management of the identification data of the owners of right on the images. But the process of generation of a mark of the invention can be used in other industrial applications. In particular, the process could be used in order to control of data flow of a company, which could register marking data on the sensible images likely to circulate on its internal network. With each input and output point of the company's network, an automatic detection device could employ the image analysis process of the invention to ensure a controlled diffusion of the images outside its network.

Thereafter, it will now be described how the invention can be adapted in the internal approach to provide, on one hand, a process of signature of a computer document such as a digitized image, and, on the other hand, an automatic process of extraction of this signature. Like previously, the signature could be made up of a logo as that which is represented on figure 1. Of course, it will be possible to use the process of signature and of retrieval of this signature without resorting to the external generation of a mark, as was previously described. Instead of being stored to a third party, the mark will be simply reintroduced into the original document itself. In this case, it is then proposed a greatly effective process of signature since a signature formed by a whole logo can be written in the document, that is to say several thousand bits.

**II Use of the invention for the digital signature of a document.**

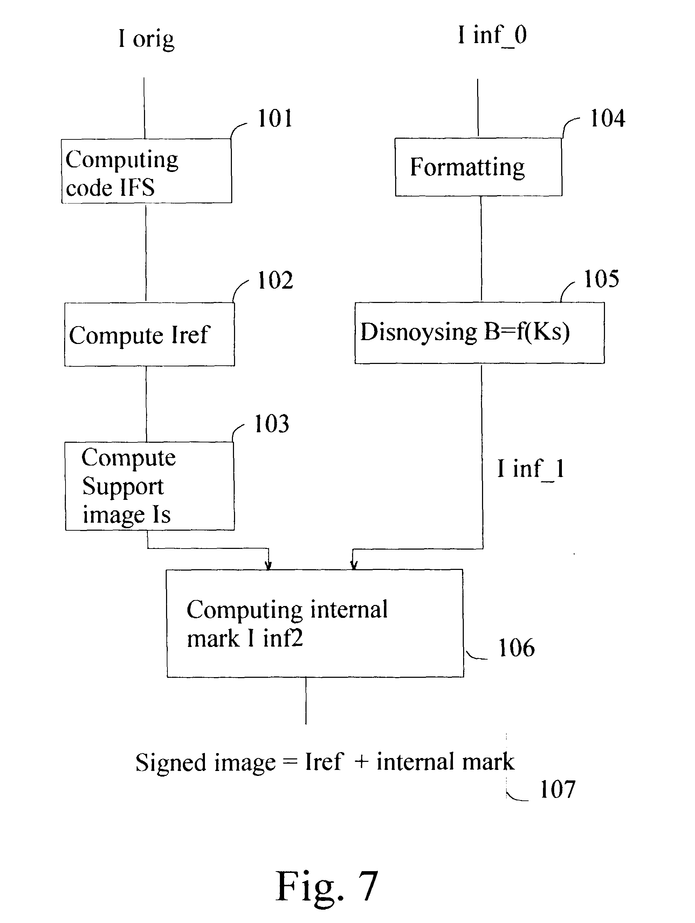

Figure 7 illustrates the process of signature of computer document. The process consists of a first processing of the original image, by means of steps 101, 102 which are respectively similar to steps 1 and 2 of figure 1. Thus, like previously for the process of generation of an external mark, in the particular case of a fractal coding, the original image $I_{orig}$ is processed in order to generate a *IFS* code which is characteristic of the original image, in step 101. Step 102 then consists in calculating, in a similar manner to that described previously, an image of reference $I_{ref}$. Naturally, as for the process of external mark generation, another lossy approximation coding different from fractal coding could be used. But in this case, it should be noted that the choice of the context is particularly determining in the process of signature : the not very faithful image of reference which is generated by the IFS code can be selected just as it is, which makes it possible to fill the difference existing with the original image, to incorporate therein information elements of the mark to be written. The invention particularly uses this difference which can be adapted according to needs and to particular applications from the selected context and IFS code. This is a significant advantage which appears particularly important in the internal approach since a great amount of information can thus be incorporated in an image which quality, after processing, will remain close to original image quality.

In step 103, the images $I_{ref}$ and $I_{orig}$ are then combined in order to generate a *support image* $I_s$. To this end, a point-by-point subtraction of vectors representative of luminance component is performed, by taking again an example similar to that described in the process of external mark generation. A difference image with numbers characteristic of gray shades variations is then obtained. But contrary to the process of external mark generation of figure 1, support image remains free from any thresholding, so that it is not binary.

Parallel to stages 101, 102 and 103, the process of signature executes a processing of marking image $I_{inf\_0}$ similar to that described in the external approach, that is to say in reference with steps 4 and 5 of figure 1.

If one considers again the example of a company logo, as that of this applicant, marking image of $I_{inf\_0}$ is submitted to a formatting step 104 which again enables to bring back its size to that of image $I_{orig}$, but also to introduce the desired redundancy effects. As previously, a double effect of redundancy is inserted : a redundancy at the local level, followed by another on general level.

At the local level, the redundancy, is again carried out by means of an oversampling of marking image $I_{inf\_0}$, constituted by Eurecom's logo. Each pixel of primary marking image $I_{inf\_0}$ is thus duplicated k times in a vertical direction and j times in a horizontal direction, such that a basic pixel of the initial logo $I_{inf\_0}$ is now represented by k x j identical pixels which are regrouped.

At the global level, a second level of redundancy is also introduced at step 104, which is based on a total duplication of the intermediate transform $I_{inf\_0.1}$, that is to say the marking image after enlargement at the local level of the logo. Thus appears a secondary marking image $I_{inf\_0.2}$, which is properly formatted, and which presents the form of a paving as that which is illustrated in figure 4. This redundancy which is introduced on a total level this time, by duplication of the enlarged logo, increases the efficiency of synchronization provided by duplication at the local level.

After the adding of redundancy, at a local level as well as a global level, a secondary marking image $I_{inf\_0.2}$ which is perfectly adapted to the size of image $I_{orig}$ to be marked and is also binary, is provided.

After step 104, the process of mark generation can optionally comprise, as for the process of external mark generation previously described, a noise element (sound effect) in an optional step 105. This noise element is introduced as previously described, that is to say by means of a random noise which can be generated by a secret key $K_s$ algorithm. It should be noticed that, in the perspective of designing a watermarking technique which involves the creation and dissemination within the public of the image being marked, the noising step 104 may appear much more appropriate and necessary than with respect to the external approach.

The result of the processing of step 105 is a marking image $I_{inf\_1}$, which is deprived of repetitivity when it is noised, and that can be used to produce a mark $I_{inf\_2}$ which could be inserted into the document to sign and more precisely the $I_{ref}$ document. Therefore, it appears that the noising step brings the double advantage or increasing the security of the marked image and further attenuates the visual effect of the marking process. In the preferred embodiment of the invention, this $I_{inf\_2}$ mark results from "modulation" or variation of noised marking image $I_{inf\_1}$ according to the GAP value contained in support image $I_s$, that is to say between the original image or the initial document long and the reference document $I_{ref}$, and according to law of correspondence between GAP and noised marking image $I_{inf\_1}$. Particularly effective results rise from the use of the following law, described in detail in the application PCT/FR99/00485 and which contents are herein incorporated by reference :

if (GAP(x,y) < 0 and $I_{inf\_1}$(x,y) = 0) Or (GAP(x,y) > 0 and $I_{inf\_1}$(x,y) = 1)
then $I_{inf\_2}$(x,y) = GAP(x,y)
if not $I_{inf\_2}$(x,y) = 0 which is concisely written:

$I_{inf\_2}$(x, y) = Inf (GAP(x, y); 0) or Sup (GAP(x, y), 0) according to whether $I_{inf\_1}$ is respectively equal to 0 or to 1.

Operators inf and sup respectively represent the mathematical operators providing respectively the smallest and the largest values considered.

This criterion of correspondence between GAP and $I_{inf\_1}$ makes it possible to establish a binary link between GAP which is coded by its sign (positive or negative), and numerical information to hide from considered the pixel, which is worth 1 or 0. Indeed, it is clear that when $I_{inf\_1}$=0, only the values of GAP which are negative will be added to the reference document $I_{ref}$, and will carry information. Conversely, when $I_{inf\_1}$=1, only positive values of GAP are added to the reference document and are consequently carrying information. In all the other cases, the value of $I_{inf\_2}$ will be set to 0, which will comes to returning the approximated value of the reference document $I_{ref}$ to build modified image $I'_{orig}$. Rather curiously with the invention it has been seen that the pixels which will be «carrying » primary digital information will tend to qualitatively move away image from $I_{ref}$ and, on the contrary, to bring it closer to $I_{orig}$, thus increasing the original fidelity of the signed image towards the original image. Various alternatives can be introduced on the way of modulating $I_{inf\_2}$ between 0 and the value of GAP, by choosing other terminal values, for example 1 and 1,2 times the value of GAP, instead of 0 and one time the value of GAP.

Once determined, internal mark $I_{inf\_2}$ can then be added to image $I_{ref}$, which makes it possible to produce the signed image $I'_{orig}$ to be broadcast. Consequently this signed image can be used, transmitted and undergo transformations. When at a given moment the transmitter of signed image (or any interested third party), is in presence of a similar image, he/she will want to check if this image $I'_{orig}$ carries a signature, and which one.

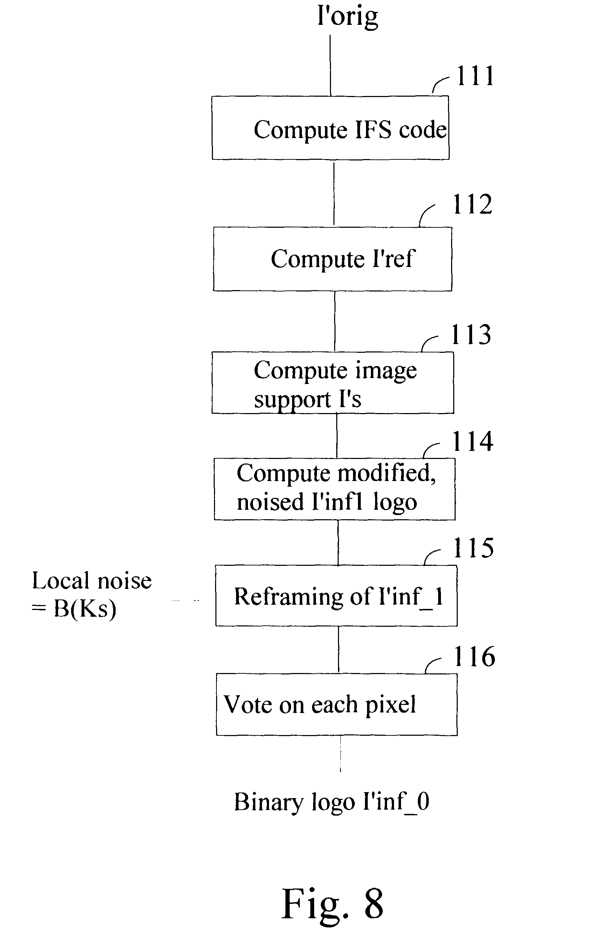

The extraction process of hidden information $I'_{inf\_2}$ from a possibly modified image $I'_{orig}$ will now be described. To this end, one refers to figure 8. In a dual way to insertion, the extraction will be carried out in the following way, as schematized in figure 2. Step 111 result to calculation of the auto-similarity W ' code associated with $I'_{orig}$ by using the same context as that used for the insertion operation. This results in a IFS code which allows, in step 112, building of a reference document, noted $I'_{ref}$ in the general case, or A' in the event of fractal calculation of $I'_{ref}$ by means of a contractive IFS code. Support image $I'_s$, that is to say $I'_{inf2}$ can then be recovered at step 113, by means of the following relation:

$$I'_{inf2} = I'_{orig} - A'$$

It should be noted that A' is to $I'_{orig}$ what A was to $I_{orig}$ in the phase of information insertion in $I_{orig}$. The codes IFS which are associated with the $I_{orig}$ images and A are identical (the first by construction and the second by definition of an attractor) and, moreover, each point-image of $I'_{orig}$ is included in the interval defined by its value in $I_{orig}$ and A.

Then, in step 114, primary digital information $I'_{inf\_1}$ is determined from secondary digital information $I'_{inf\_2}$ by means of a test corresponding to the insertion operation :

$$\text{if } I'_{inf\_2}(x,y) > \text{predetermined threshold, then } I'_{inf\_1}(x,y) = 1$$

$$\text{if } I'_{inf\_2}(x,y) < \text{threshold then } I'_{inf\_1}(x,y) = 0$$

if not «one cannot say »(for the pixel (x,y) does not contain any hidden information). By default, the predetermined threshold is fixed to 0, but other larger thresholds can be used to adapt the robustness characteristics of algorithm to the user's needs : other «larger thresholds » can be used in order to limit the risks to be mistaken in each point (x,y), but in this case the number of binary data recovered from whole hidden information is similarly decreased.

Thus the result of the extraction phase of step 114 allows of product a $I'_{inf\_1}$ image which is likely to contain, in a form possibly degraded by intermediate transformations of the signed image, logo $I_{inf\_1}$ which was used during the signature.

The process then continues with postprocessing steps 115 and 116 which enable rebuilding, if necessary, of the $I_{inf\_0}$ logo which was used during the signature, from its $I'_{inf\_1}$ image, recovered in extraction steps 111-114.

The document $I'_{inf\_1}$ corresponds to a binary noised and possibly degraded and unreadable representation of the original logo $I_{inf\_0}$, after redundancy and formatting. It is necessary, as is illustrated in step 115, to proceed to a resynchronization between the local noise B regenerated from the secret key $K_s$, and signature $I'_{inf\_1}$. The technique of reframing the supposed signature $I'_{inf\_1}$ and the noise locally introduced during the formation of signature $I_{inf\_1}$, is again based on a search for coherence between the various bits contributing to the rebuilding of a pixel of the primary logo $I_{inf\_0}$. To this end, a criterion built on the basis of two subcriteria related to the two levels of preprocessing of step 4 of figure 1 - namely the local enlargement of a factor K, and of total replication I times of enlarged logo $I_{inf\_0}$ is maximized.

The first local subcriterion is related to oversampling of the logo and checks that the bit value is constant over the period of oversampling. This condition is met only if the noise is correctly reframed with $I'_{inf\_1}$. Indeed, before noising of signature $I_{inf\_0.2}$. the bit value of the signature is locally reproduced k times around this bit, and the value of this bit is still reproduced L times on the level of the total signature, because of the replication of the redundant signature $I_{inf\_0.2}$ before it was noised.

Consequently, by eliminating noise influence on the supposed signature $I'_{inf\_1}$, one must find the same type of local and total coherence. It is thus enough to test several possible transformations relating to $I'_{inf\_1}$ and selected in a dictionary and, several types of relative reframing of the noise compared with the supposed signature $I'_{inf\_1}$, and according to the results, one will know if the image to be tested is signed and the then signature will automatically be extracted. Thus, as at step 16 of figure 2, reframing of the noise and signature $I'_{inf\_1}$ in step 115 is done by a series iterations through which successive transformations are applied to $I'_{inf\_1}$ and, for each one of them, its effect on coherence of value $I'_{inf\_1}$ XOR B, that is to say $I'_{inf\_0.2}$., is considered correct when both redundancy subcriteria are satisfied.

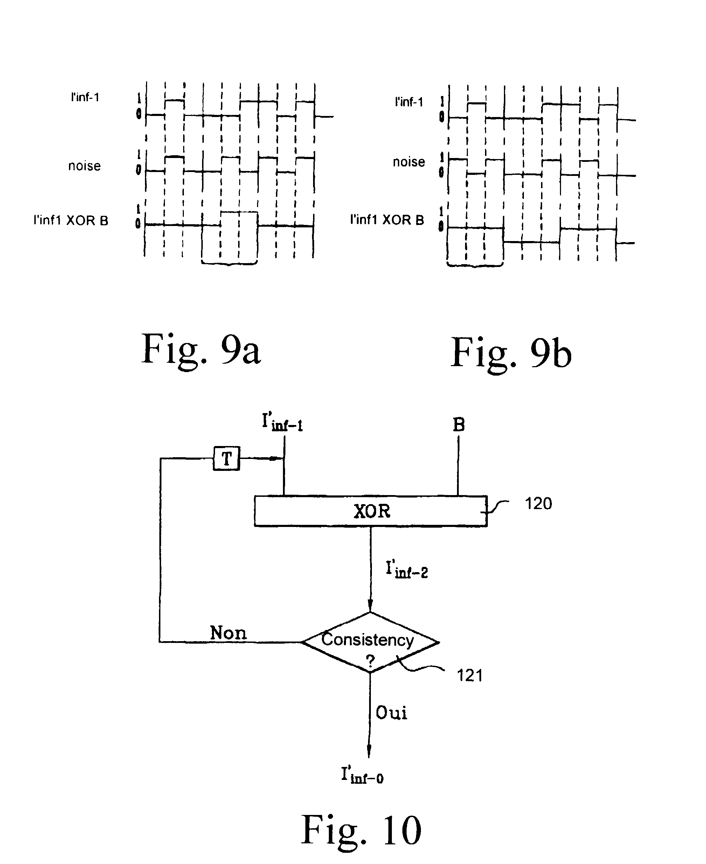

Reframing of the noise with $I'_{inf\_1}$ is illustrated in connection with figures 9a and 9b, where the successive states of $I'_{inf\_1}$, of the noise B, and the function $I'_{inf\_1}$XOR B (represented in fig.10 in reference with process step 120) are shown. In figure 9a, the bit value of $I'_{inf\_1}$ XOR B is not constant over the period of oversampling (here three basic times), which means that the noise B is not correctly not reframed. In figure 9b, to illustrate reframing effect, noise B has been offset by one point towards the right. In this elementary example values of bits of $I'_{inf\_1}$ XOR B have become constant on period of oversampling, and it can be concluded that noise B is now correctly reframed in relation to $I'_{inf\_1}$, which means there is local coherence, in the vicinity of the tested area of $I'_{inf\_1}$.

In order to test this coherence, based on both preceding subcriterion at the local and total level, a function known as coherence function is built. In reference with figure 10, a score of coherence (step 121) to maximize is calculated. This score is calculated as follows : for each basic binary bit of the logo, on all its occurrences in $I'_{inf\_0.2}$,

the difference in absolute value between the pixels whose binary value is to zero with those whose binary value is to one is calculated, then all n pixels of the basic logo $I_{inf\_0}$ are added up, this sum constituting a score of coherence to maximize by use of possible transformations applied to the supposed signature. Reframing is then similar to the maximization of this function in relation to the variable of the transformations which takes its values in a predefined set : offset, scaling factor, rotation etc ... In practice, it is like iteratively testing the value of the function of coherence for a whole series of transformations T of the image, and retaining the transformation or the combination of transformations which maximizes the function of coherence. It should be noted that the calculation of each score is independent of the others, and all calculations can be made in parallel. In other terms, all transformations T to be tested, to each of which will correspond a score, could be realized in parallel. These transformations comprise all the operations of image translations, mirroring effect, of positive and negative zooming, or combinations thereof. The method could be immediately extended to other transformations if needed.

Once reframing is complete, if necessary, the revealed redundancy can be exploited to regenerate the signature registered in image $I'_{orig}$. This exploitation consists in reversing redundancy adding by replacing the kxl pixels which «vote » in a certain manner by a single pixel in order to pass from document $I'_{inf\_0.2}$ to document $I'_{inf\_0}$. Step of process 116 thus results in organizing a «vote », possibly weighted, with information resulting from the reframing of step 115, concerning occurrences value (0, 1, unspecified) among all occurrences of this element in the primary formatted signature $I'_{inf\_0.2}$. If the result of the vote led to a score higher than a certain predetermined threshold, the logo pixel of takes the value of the dominant group of pixels. The precise value of the threshold to set can be determined by people qualified in the art. At the end of voting step 116, a binary image $I'_{inf\_0}$ is obtained. If modified image $I'_{orig}$ was obtained from transformations of an image signed with signature $I_{inf\_0}$, then $I'_{inf\_0}$ will be identical to $I_{inf\_0}$, within a few bits sometimes. Concretely, if the inserted signature $I_{inf\_0}$ is a visible logo (for example Eurecom's logo such as shown in figure 3), the recovered signature $I'_{inf\_0}$ can be immediately recognized by means of a mere visual examination.

Thus, as it is noted, the invention enables automatic recovery of a signature which is written into a signed document, and further allows use of large signatures while reducing the distortion introduced into the image because of the signature writing.

The insertion and extraction method were particularly described in relation to fractal analysis method, with or without contractive code, which produces good results. It is however necessary to note that, in the particular case of digital imagery, the process of the invention can be used with other approximation methods, for example a Jpeg coding, a cosine coding or a simple process of resolution reduction.

### Claims

1. Method of marking a multi-media document $I_{orig}$, such as a fixed or animated image, by generating an external mark from said document and a marking image $I_{inf\_0}$, characterized in that the method comprises the following steps :

   - decomposing (1) the initial document $I_{orig}$ according to a fractal analysis method revealing a IFS code ;

   - determining (2) a reference image $I_{ref}$ corresponding to said IFS code ;

   - point-by-point subtracting (3) the initial document $I_{orig}$ and reference image $I_{ref.}$, and according to least one vector representative of the image, then thresholding the result to produce a binary support image $I_s$ ;

   - formatting (4) the marking image $I_{inf-0}$ so as to obtain an image of the same size as the support image $I_s$ by pre-introducing at least one level of redundancy ;

   - point-by-point combining (6) the marking image $I_{inf\_0}$, formatted beforehand, with said support image by means of a logical operation, for example XOR or inverse XOR, so as to generate an external mark which can be filed.

2. Method according to claim 1 characterized in that the IFS code is of contractive type and that image formatting is then followed by a noisying operation by means of a secret key Ks.

3. Method according to claim 2 characterized in that the step of formatting the marking image $I_{inf\_0}$ includes :

   - a first step of duplication of each pixel of the marking image so as to introduce a vertical and horizontal redundancy, on a local level in a vicinity of each pixel ;

- a second step of duplication on a global level consisting in reproducing several times the result of said first step.

4. Method according to claim 1 characterized in that to determine a image of reference $I_{ref.}$ from the initial document $I_{orig}$, the fractal method is used, which consists in :

   - cutting out the initial document $I_{orig}$ into a set of primitives *range(i)* covering the totality of the initial document;

   - extracting a set of primitives *domain(j)* from the initial document $I_{orig}$, in order to create a dictionary of basic primitives *domain(j)* (Dbase) ;

   - determining an additional dictionary of primitive *domain (Dfinal),* from the dictionary of *basic* primitives *domain* (Dbase), by applying a set of local geometric and/or photometric transformations Wi to the basic primitives ;

   - matching each basic primitive *range(i)* with an element of the dictionary *(Dfinal),* such that each primitive *range (i)* is equal to a primitive *domains(j)* transform by a local transformation wi, within about an error (epsilon), the image made up of all the primitives *range(i)* approximated from a primitive *domain(j)* constituting reference image $I_{ref}$.

5. Method of checking a multi-media document $I_{orig}$ intended to bring relate it to a mark generated according to the method of claim 1 and stored in a database, characterized in that it comprises the following steps :

   - decomposing (11) the multi-media document $I'_{orig}$ according to a fractal analysis method providing a IFS code, in particular of contractive type;

   - determining (12) an attractor image $I'_{ref}$ corresponding to said IFS code ;

   - point-by-point subtracting (13) the multimedia document $I'_{orig}$ and attractor image $I'_{ref}$, and according to at least one vector representative of the image, then thresholding the result to produce a binary support image $I'_{s}$ ;

   - combining (16, 17) the disnoised mark by means of XOR or inverse XOR logical operation with said support image of $I'_{s}$ by preliminary proceeding to reframing of the latter to take into account any possible transformation undergone by said image $I'_{orig}$ to analyze.

   - formatting the result of the combination so as to excerpt the marking image written inside said mark.

6. Method according to claim 5 characterized in that said reframing operation comprises the following steps :

   - point-by-point combining (16), the disnoised mark with said support image of $I'_{s}$ by means of a logical operation, by proceeding to a preliminary elementary geometric transformation T on said support image $I'_{s}$ ;

   - proceeding to an iteration of combinations for a whole collection of elementary transformations defined in a dictionary and, for each one of them, calculating a score of coherence intended to maximize the redundancy effect potentially existing on a local and also general level.

7. Use of the method of generating a mark according to claim 1 in a certification server allowing automatic recording of multimedia documents, via a telecommunications network by means of a process comprising :

   - receiving (21) a recording request arriving to the certification server through the network ;

   - transmitting (22) a request inviting the requesting user to produce his/her personal identification data associated to a password, if necessary ;

   - establishing (23) a digital image recording transaction;

   - receiving (24) a digital image produced by the requesting user, and generating a mark corresponding to said image, then filing said mark ;

   - transmitting (25) the filed identification data of said mark to the requesting user;

- continuing recording until the last image subjected by the requesting user has been recorded , and

- closing the recording session.

**8.** Method according to claim 1 characterized in that the marking file $I_{inf\_0}$ comprises control information to be inserted into the external mark, and likely to be detected by a telecommunications network control system in order to intercept the multi-media document circulating within the network.

**9.** Method of marking of a multi-media document $I_{orig}$, such as a fixed or animated image, by generating a mark from said document and a marking image $I_{inf\_0}$, characterized in that the method comprises the following steps :

- decomposing (1) the initial document $I_{orig}$ according to a lossy approximation method;

- determining (2) a reference image $I_{ref}$;

- point-by-point subtracting (3) the initial document $I_{orig}$ and reference image $I_{ref}$, and according to at least one vector representative of the image in order to produce a support image $I_s$ ;

- formatting (4) the marking image $I_{inf\_0}$ so as to obtain an image of the same size as the support image $I_s$ by pre-introducing at least one level of redundancy;

- point-by-point combining (6) the marking image $I_{inf\_0}$, formatted beforehand, with the support image so as to generate a mark or a signature which can be, according to the case, either filed, or internally reintroduced into the initial document $I_{orig}$.

**10.** Method according to claim 9 characterized in that the lossy approximation method is a autosimilarity method based fractal analysis, and in that the mark is an internal mark I inf-2 which is reintroduced into image $I_{ref}$ and is point-by-point calculated according to the GAP value of support image $I_s$ and according to a law of correspondence between the GAP value and said formatted marking image.

**11.** Method according to claim 10 characterized in that step of formatting marking image $I_{inf\_0}$ includes :

a first step of duplication of each pixel of the marking image so as to introduce, on a local level in a vicinity of each pixel, a vertical and horizontal redundancy ;

a second step of duplication on a total level, consisting in reproducing several times the result of said first step;

a step of pseudo-random noising the signature in order to obtain a noised binary document $I_{inf\_1}$.

**12.** Method according to claim 11 characterized in that said internal mark $I_{inf\_2}$ is determined by the following formula :

$$I_{inf\_2} (X, y) = inf (GAP(x, y); THRESHOLD) \text{ or } sup (GAP(x, y), THRESHOLD),$$

according to whether $I_{inf\_1}(x, y)$ is respectively equal to 0 or 1, or conversely, with THRESHOLD equal to a predetermined value; the latter being then combined with the reference document I ref by means of an OR exclusive (XOR) operation.

**13.** Method of extracting a mark used as signature in a digital document $I'_{orig}$ to test, comprising the following steps :

- determining a digital reference document $I'_{ref}$ by means of a lossy approximation method ;

- determining the gap GAP between said document to test $I'_{orig}$ and the reference document $I'_{ref}$.;

- deducing signature $I'_{inf\_1}$ by comparing said GAP with a threshold value ,

- reframing noise (b) and supposed signature $I'_{inf\_1}$ in order to maximize a function of coherence between the noise and the supposed signature;

- on reaching a maximum coherence, higher than a certain threshold of coherence, between noise (b) and the supposed signature $I'_{inf\_1}$, deducing from it that the noise and supposed signature are correctly reframed, and that the image is a signed image.

14. Method according to claim 13 characterized in that noise (b) and the supposed signature $I'_{inf\_1}$ are OR exclusived to be reframed, in order to generate an image $I'_{inf\_0.2}$ then this image is checked for a degree of coherence, if it does not present any a transformation T is applied to the supposed signature $I'_{inf\_1}$, and reframing process is repeated with other transformations T, until obtaining a maximum degree of coherence in image $I'_{inf\_0.2}$.

15. Method according to claim 14, characterized in that to measure coherence of a supposed signature $I'_{inf\_1}$, for each basic binary bit of the logo, in all its occurrences, the difference in absolute value between the pixels whose binary value is to zero and those whose binary value is one is calculated, then all n pixels of the basic logo $I_{inf\_0}$ are added up, this sum constituting a score of coherence to maximize by use of possible transformations applied to the supposed signature $I'_{inf\_1}$.

16. Method according to any of claims 13 to 15 characterized in that to reconstitute the primary signature $I'_{inf\_0}$, for each primary signature element to be rebuilt, a vote about the occurrences value from (0, 1, unspecified) among all the occurrences of this element in the primary formatted signature $I_{inf\_0.2}$ is organised, which can be balanced by information resulting from reframing.

17. Method according to the claim 9 or 13 characterized in that reference image $I_{ref}$ is determined by means of a lossy approximation method such as a Jpeg coding, a cosine coding or a coding by reduction of the image resolution.

I orig                                          I inf_0

```
┌─────────────┐  1              ┌─────────────┐  4
│ Compute IFS │                 │ formatting  │
│ code        │                 │             │
└─────────────┘                 └─────────────┘
```

I inf_0.2

```
┌─────────────┐  2              ┌──────────────────┐  5
│ Compute Iref│                 │ noising  B=f(Ks)  │
│             │                 │                   │
└─────────────┘                 └──────────────────┘
```

I inf_1

```
┌─────────────┐  3
│ compute     │
│ support image│
│ Is          │
└─────────────┘
```

```
        ┌─────────────┐
        │ combining   │
        │             │
        └─────────────┘  6
```

external mark

# Fig. 1

l'orig

filed mark

Ks

| Compute IFS code | 11 |

| Generation of pseudorandom sequence | 14 |

| Compute I'ref | 12 |

| Extraction of noise | 15 |

| Compute support image I's | 13 |

| Reframing and consistency test | 16 |

l'inf_0.2

| Reconstruction of logo | 17 |

Fig. 2

## FIG. 3

10

$I_{inf-0}$

$I_{inf-0.1}$

20

## FIG. 4

30

$I_{inf-0.2}$

Applicant                                    Certification server

21 — registration request

22 — identification request message

23 — transmission Applicant id data + password

24 — start of session

25 — transmission of image to be registered

26 — transmission mark id

27 — next image to be registered?

28 — end of registration session

# Fig. 5

Third party                                  Certification server

31 — transmission of mark id with image to check

32 — transmission of logo

# Fig. 6

I orig
I inf_0

```
┌─────────────┐ 101      ┌─────────────┐ 104
│ Computing   │          │ Formatting  │
│ code IFS    │          │             │
└─────────────┘          └─────────────┘

┌─────────────┐ 102      ┌────────────────────┐ 105
│ Compute Iref│          │ Disnoysing B=f(Ks)  │
└─────────────┘          └────────────────────┘

┌─────────────┐ 103                   I inf_1
│ Compute     │
│ Support     │
│ image Is    │
└─────────────┘
```

┌──────────────────────────┐
│ Computing internal       │
│ mark I inf2              │
│                    106   │
└──────────────────────────┘

Signed image = Iref + internal mark

107

# Fig. 7

l'orig

111

Compute IFS code

112

Compute I'ref

113

Compute image support I's

114

Compute modified, noised I'inf1 logo

Local noise = B(Ks)

115

Reframing of I'inf_1

116

Vote on each pixel

Binary logo I'inf_0

Fig. 8

Fig. 9a  Fig. 9b

Fig. 10

**European Patent Office**

**EUROPEAN SEARCH REPORT**

Application Number

EP 99 48 0075

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DAVERN P ET AL: "FRACTAL BASED IMAGE STEGANOGRAPHY" INFORMATION HIDING. INTERNATIONAL WORKSHOP PROCEEDINGS,30 May 1996 (1996-05-30), pages 279-294, XP002048612 * the whole document * | 1,5,9,13 | G06T11/00 |
| A | PUATE JOAN ET AL: "Using Fractal Compression Scheme to Embed a Digital Signature into an Image" PROCEEDINGS OF THE SPIE, vol. 2915, 21 November 1996 (1996-11-21), pages 108-118, XP002085678 * page 113, line 2 - page 114, line 22 * | 1,5,9,13 | |

TECHNICAL FIELDS SEARCHED (Int.Cl.7)

G06T

The present search report has been drawn up for all claims

| Place of search | Date of completion of the search | Examiner |
|---|---|---|
| BERLIN | 20 October 1999 | Burgaud, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)